# EUROPÄISCHE PATENTSCHRIFT

(11) **EP 0 463 479 B1**
(45) Veröffentlichungstag und Bekanntmachung des Hinweises auf die Patenterteilung: **13.01.1999**
(21) Anmeldenummer: 91109640.2
(22) Anmeldetag: 12.06.1991
(51) Int. Cl.: C08G 18/30, C08J 9/14, C08J 9/02

(54) **Herstellung von zellhaltigen Kunststoffen nach dem Polyisocyanat-Polyadditionsverfahren unter Mitverwendung von tertiären Alkoholen**
Preparation of cellular synthetic resins by the polyisocyanate polyaddition process using tertiary alcohols
Préparation de résines synthétiques cellulaires par le procédé de polyaddition de polyisocyanates en utilisant des alcools tertiaires

(30) Priorität: 23.06.1990 DE 4020079
(43) Veröffentlichungstag der Anmeldung: 02.01.1992
(73) Patentinhaber: BASF Aktiengesellschaft, 67063 Ludwigshafen (DE)
(72) Erfinder: Boehme, Ralf, W-6700 Ludwigshafen (DE); Volkert, Otto, Dr., W-6719 Weisenheim (DE)

(56) Entgegenhaltungen:
- EP-A- 0 050 285
- DE-A- 3 502 997
- US-A- 3 338 846

## Beschreibung

Gegenstand der Erfindung ist ein Verfahren zur Herstellung von zellhaltigen Kunststoffen, vorzugsweise harten Urethangruppen enthaltenden Formschaumstoffen mit einer verdichteten Randzone und einem zelligen Schaumstoffkern, nach dem Polyisocyanat-Polyadditionsverfahren durch Umsetzung von
a) organischen und/oder modifizierten organischen Polyisocyanaten mit
b) mindestens einer höhermolekularen Verbindung mit mindestens zwei reaktiven Wasserstoffatomen mit Ausnahme von olefinisch ungesättigten Polyestern oder Alkydharzen und gegebenenfalls
c) niedermolekularen Kettenverlängerungs- und/oder Vernetzungsmitteln in Gegenwart von
d) tertiären Alkoholen oder vorzugsweise Mischungen aus mindestens einem tertiären Alkohol und Wasser als Treibmittel,
e) Katalysatoren und gegebenenfalls
f) Hilfsmitteln und/oder Zusatzstoffen.

Die Herstellung von zellhaltigen Polyisocyanat-Polyadditionsprodukten, wie z.B. zelligen Polyurethan-Elastomeren und flexiblen, halbharten oder harten Polyurethan-Schaumstoffen, durch Umsetzung von organischen Polyisocyanaten und/oder modifizierten organischen Polyisocyanaten mit höhermolekularen Verbindungen mit mindestens zwei reaktiven Wasserstoffatomen, beispielsweise Polyoxyalkylen-polyaminen und/oder vorzugsweise organischen Polyhydroxylverbindungen mit Molekulargewichten von z.B. 500 bis 12 000 und gegebenenfalls Kettenverlängerungs- und/oder Vernetzungsmitteln mit Molekulargewichten bis ungefähr 500 in Gegenwart von Katalysatoren, Treibmitteln, Hilfsmitteln und/oder Zusatzstoffen ist bekannt aus zahlreichen Patent- und Literaturveröffentlichungen. Durch geeignete Wahl der Aufbaukomponenten Polyisocyanat, höhermolekularen Verbindungen mit reaktiven Wasserstoffatomen und gegebenenfalls Kettenverlängerungs- und/oder Vernetzungsmitteln können nach dieser Methode elastische oder starre, zellhaltige Polyisocyanat-Polyadditionsprodukte sowie alle dazwischen liegende Modifikationen hergestellt werden.

Eine übersicht über die Herstellung von zelligen Polyurethan(PU)-Elastomeren, Polyurethan(PU)-Schaumstoffen und Polyisocyanurat(PIR)-Schaumstoffen sowie Formkörpern mit einer verdichteten Randzone und einem zelligen Kern aus derartigen Polyadditionsprodukten, ihre mechanische Eigenschaften und ihre Verwendung wird beispielsweise in den Monographien High Polymers, Band XVI, "Polyurethanes", Teil I und II von J.H. Saunders und K.C. Frisch (Verlag Interscience Publishers, New York 1962 bzw. 1964), Kunststoff-Handbuch, Band VII, "Polyurethane", 1. Auflage 1966, herausgegeben von Dr. R. Vieweg und Dr. A. Höchtlen und 2. Auflage, 1983, herausgegeben von Dr. G. Oertel (Carl Hanser Verlag, München) und "Integralschaumstoffe", herausgegeben von Dr. H. Piechota und Dr. H. Röhr (Carl Hanser Verlag, München, Wien 1975) gegeben.

Zur Herstellung von zellhaltigen Kunststoffen nach dem Polyisocyanat-Polyadditionsverfahren werden im wesentlichen zwei Arten von Treibmitteln verwendet:

Niedrigsiedende, inerte Flüssigkeiten, die unter dem Einfluß der exothermen Polyadditionsreaktion verdampfen, beispielsweise Alkane wie Butan, Pentan u.a. oder vorzugsweise halogenierte Kohlenwasserstoffe, wie Methylenchlorid, Dichlormonofluormethan, Trichlorfluormethan u.a. und chemische Verbindungen, die durch eine chemische Reaktion oder thermische Zersetzung Treibgase bilden. Beispielhaft genannt seien die Umsetzung von Wasser mit Isocyanaten unter Bildung von Aminen und Kohlendioxid, die synchron zur Polyurethanherstellung abläuft und die Spaltung von thermisch labilen Verbindungen wie z.B. Azoisobuttersäurenitril, das neben Stickstoff als Spaltprodukt toxisches Tetramethylbernsteinsäuredinitril ergibt oder Azodicarbonamid, dessen Verwendung als Bestandteil einer Treibmittelkombination in der EP-A 0 092 740 (CA 1 208 912) beschrieben wird. Während die zuletzt genannte Methode, bei der thermische labile Verbindungen wie z.B. Azoverbindungen, Hydrazide, Semicarbazide, N-Nitrosoverbindungen, Benzoxazine u.a. (Kunststoffe 66 (1976), 10, Seiten 698 bis 701) üblicherweise in ein vorgefertigtes Polymer eingearbeitet oder auf das Kunststoffgranulat aufgetrommelt und durch Extrusion verschäumt werden, technisch von untergeordneter Bedeutung blieb, finden die physikalisch wirkenden, niedrigsiedenden Flüssigkeiten, insbesondere Chlorfluoralkane, weltweit in großem Maßstabe zur Herstellung von Polyurethan- oder Polyisocyanurat-Schaumstoffen Verwendung. Nachteilig an diesen Treibgasen ist lediglich die Belastung der Umwelt. Bei der Bildung von Treibgasen durch thermische Spaltung oder chemische Reaktion entstehen hingegen Spaltprodukte und/oder reaktive Nebenprodukte, die in das Polyadditionsprodukt eingelagert oder chemisch gebunden werden und zu einer unerwünschten Veränderung der mechanischen Eigenschaften des Kunststoffes führen können. Im Fall der Bildung von Kohlendioxid aus Wasser und Isocyanat entstehen Harnstoffgruppen im Polyadditionsprodukt, die in Abhängigkeit von ihrer Menge zu einer Verbesserung der Druckfestigkeit bis zur Versprödung des Polyurethans führen können.

Der Mechanismus der Schaumbildung bei der Herstellung von Polyisocyanat-Polyadditionsprodukten und der Einfluß von oberflächenaktiven Hilfsmitteln auf der Grundlage von Siloxan-oxalkylen-copolymeren auf diese Reaktion wurde von B. Kanner et al. (J. of cellular Plastics, January 1969, Seiten 32 bis 39) beschrieben.

Nach Angaben dieser und anderer Publikationen ist als wesentliches Erfordernis für die Bildung von zellhaltigen Polyisocyanat-Polyadditionsprodukten mit gleichförmiger Zellstruktur und guten mechanischen Eigenschaften die homogene Lösung der Treibmittel, wie z.B. des Kohlendioxids und/oder der inerten, niedrigsiedenden Flüssigkeiten, in den organischen Polyisocyanaten und/oder den Verbindungen mit reaktiven Wasserstoffatomen anzusehen ("Blowing Agents for Polyurethanes" von L.M. Zwolinski in Rubber Age, July 1975, Seiten 50 bis 55 und GB-A-904 003). Falls die Treibmittel nicht in den vorgenannten Aufbaukomponenten löslich sind, werden nur grobporige oder in den meisten Fällen überhaupt keine Schaumstoffe erhalten.

Zur Verminderung dieses Nachteils werden nach Angaben der US-A-4 544 679 spezielle Polyolmischungen mit erhöhter Fluorchlorkohlenwasserstofflöslichkeit eingesetzt und/oder es wird versucht durch Zusatz von teilweise erheblichen Mengen an Lösungsvermittlern homogene Lösungen aus Treibmitteln und den Polyisocyanaten und/oder Polyolen zu erhalten (K. Tanabe, I. Kamemura und S. Kozawa, 28. SPI-Conf. 1984, Seiten 53 bis 57).

Bekannt ist ferner aus der DE-B-1 126 131 (US 2 865 869) ein Verfahren zur Herstellung von Polyesterurethan-Schaumstoffen durch Umsetzung von Alkydharzen und Polyisocyanaten unter Zusatz einer in der Wärme gasbildenden Reaktionsmasse. Als geeignete gasbildende Reaktionsmassen werden Mischungen aus tertiären Alkoholen und einer katalytisch wirksamen Menge einer anorganischen oder organischen konzentrierten Säure, wie z.B. Schwefelsäure, Phosphorsäure, Salpetersäure, Salzsäure, Pikrinsäure, Trifluoressigsäure, oder einer Lewissäure, wie z.B. Aluminiumchlorid oder Bortrifluorid, genannt. Nachteilig an derartigen Polyesterurethan-Schaumstoffen ist ihre geringe Hydrolysestabilität. Durch die Bildung neuer Carboxylgruppen durch Verseifung der Estergruppen wird der hydrolytische Abbau des Polyadditionsproduktes zusätzlich autokatalytisch beschleunigt, so dap die Polyesterurethan-Schaumstoffe, hergestellt auf der Grundlage von olefinisch ungesättigten Polyestern und vorzugsweise Mischungen aus 2,4- und 2,6-Toluylen-diisocyanat nur unzureichende mechanische Eigenschaften aufweisen.

Die DE-A-35 02 997 beschreibt ein Verfahren zur Verfestigung von geologischen Formationen unter Verwendung eines Gemisches aus organischen Polyhydroxylverbindungen und einwertigen primären, sekundären oder tertiären Alkoholen als Polyolkomponente zur Herstellung von PU-Schaumstoffen. Die zugesetzten einwertigen Alkohole bewirken eine Erhöhung der Klebfähigkeit und Haftfestigkeit der PU-Schaumstoffe an den Gesteinen. Die Offenlegungsschrift nennt Wasser und Halogenmethane als Treibmittel.

Nach Angaben der US-A-3 338 846 können PVC- und PVC-PU-Schaumstoffe nach dem Vorschaum (Frothing)-Verfahren unter Verwendung eines flüssigen und festen Treibmittels, z.B. eines Halogenalkans und eines Urethans, hergestellt durch Umsetzung eines einwertigen tertiären Alkohols und eines organischen Isocyanats, erhalten werden.

Nicht beschrieben werden in den Patentschriften Verfahren zur Herstellung von Integralschaumstoffen und mikrozellularen Formkörpern nach der Reaktionsspritzgußtechnik (RIM).

Die EP-A-0 050 285 beschreibt einbaufähige Aldoxime als Treibmittel zur Herstellung von PU-Schaumstoffen, wie z.B. PU-Integralschaumstoffen. Aldoxime reagieren bekanntermaßen mit Isocyanaten unter Bildung von Kohlendioxid als Treibmittel und Alkylnitril. Da die entstehenden Alkylnitrile physiologisch bedenklich sind, können diese bei Verwendung von Aldoximen mit NCO-reaktiven Gruppen in die PU-Matrix eingebaut werden.

Die Aufgabe der vorliegenden Erfindung bestand darin, die Fließeigenschaften von Reaktionmischungen zur Herstellung von Polyisocyanat-Polyadditionsprodukten zu verbessern. Durch diese Maßnahme sollte eine gleichmäßige Füllung der Formwerkzeuge, auch unter Druck mittels der Reaktionsspritzgußtechnik (RIM) ermöglicht werden. Die Formkörper sollten eine glatte, im wesentlichen porenfreie Oberfläche aufweisen.

Außerdem sollten die als Treibmittel zur Herstellung von zellhaltigen Kunststoffen nach dem Polyisocyanat-Polyadditionsverfahren bekannten Fluorchlorkohlenwasserstoffe durch andere, umweltfreundliche Treibmittel ersetzt werden.

Diese Aufgabe konnte überraschenderweise gelöst werden durch den Einsatz von tertiären Alkoholen in Gegenwart oder Abwesenheit von Wasser als Treibmittel.

Gegenstand der Erfindung ist somit ein Verfahren zur Herstellung von zellhaltigen Kunststoffen nach dem Polyisocyanat-Polyadditionsverfahren durch Umsetzung von
a) organischen und/oder modifizierten organischen Polyisocyanaten mit
b) mindestens einer höhermolekularen Verbindung mit mindestens zwei reaktiven Wasserstoffatomen mit Ausnahme von Alkydharzen und gegebenenfalls
c) niedermolekularen Kettenverlängerungs- und/oder Vernetzungsmittel
in Gegenwart von
d) Treibmitteln,
e) Katalysatoren und gegebenenfalls
f) Hilfsmitteln und/oder Zusatzstoffen,
das dadurch gekennzeichnet ist, daß man als Treibmittel (d) mindestens einen tertiären Alkohol (di) der allgemeinen Formel 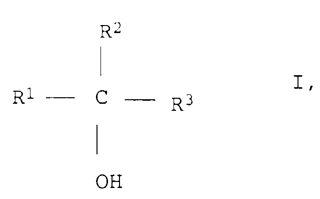 in der R¹, R² und R³ aliphatische Gruppen sind, wobei R¹ mindestens ein Wasserstoffatom enthält, das an den unmittelbar an die Carbinolgruppe gebundenen Kohlenstoff gebunden ist, verwendet.

Ein anderer Gegenstand der Erfindung ist ein Verfahren zur Herstellung von Formkörpern mit einer verdichteten Randzone und einem zelligen Kern aus Urethangruppen enthaltenden Kunststoffen durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren und gegebenenfalls
f) Hilfsmitteln und/oder Zusatzstoffen,
in einem geschlossenen Formwerkzeug unter Verdichtung, das dadurch gekennzeichnet ist, daß man als Treibmittel (d) mindestens einen tertiären Alkohol (di) der allgemeinen Formel I verwendet.

Durch die Mitverwendung der tertiären Alkohole (di) wird die Fließfähigkeit der Reaktionsmischung erheblich verbessert, so daß auch großvolumige Formwerkzeuge mit komplizierten Raumformen gleichmäßig gefüllt werden können. Dadurch bedingt werden Formkörper mit gleichförmigen mechanischen Eigenschaften erhalten. Obgleich die Verschäumung in Abwesenheit von physikalisch wirkenden Treibmitteln und vorzugsweise in Gegenwart von Kohlendioxid, gebildet durch Umsetzung von Wasser mit Polyisocyanaten, durchgeführt wird, werden unter Verdichtung in einem geschlossenen, zweckmäßigerweise temperierten Formwerkzeug zellige Formkörper erhalten mit einer im wesentlichen porenfreien, stark ausgeprägten Randzone und einer kompakten glatten Oberfläche. Diese stark ausgeprägte Randzone tritt insbesondere auf bei der Herstellung von Urethangruppen enthaltenden harten Integralschaumstoffen mit einer Gesamtdichte von 0,3 bis 1 g/cm³, sogenannten Duromeren. Die mechanischen Eigenschaften der erfindungsgemäß hergestellten Duromeren sind zumindest vergleichbar, üblicherweise jedoch besser als bei mit Trichlorfluormethan verschäumten Produkten; vorteilhaft und daher erwähnenswert ist jedoch die Homogenität der mechanischen Eigenschaften über das gesamte Formteil.

Zu den Aufbaukomponenten (a) bis (f), insbesondere den erfindungsgemäß verwendbaren Treibmitteln (d), zur Herstellung der zelligen Polyisocyanat-Polyadditionsprodukte, vorzugsweise der Urethangruppen oder Urethan- und Isocyanuratgruppen enthaltenden Schaumstoffe, ist folgendes auszuführen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4-und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI), vorzugsweise solche mit einem Diphenylmethan-diisocyanat-Isomerengehalt von 30 bis 80 Gew.%, bezogen auf das Roh-MDI-Gewicht und Mischungen aus Roh-MDI und Toluylen-diisocyanaten. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 1800 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyesterund/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15 Gew.%, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen vorzugsweise zur Anwendung zur Herstellung von zelligen Elastomeren: NCO-Gruppen enthaltende Prepolymere mit einem NCO-Gehalt von 25 bis 9 Gew.%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4'-Diphenylmethan-diisocyanat oder Diphenylmethan-diisocyanat-Isomerengemischen, zur Herstellung von flexiblen Polyurethanschaumstoffen: Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI und zur Herstellung von Polyurethan- oder Polyurethan-Polyisocyanurat-Hartschaumstoffen: Roh-MDI.
b) Als höhermolekulare Verbindungen b) mit mindestens zwei reaktiven Wasserstoffatomen werden zweckmäßigerweise solche mit einer Funktionalität von 2 bis 8 und einem Molekulargewicht von 400 bis 8000 verwendet. Bewährt haben sich z.B. Polyether-polyamine und/oder vorzugsweise Polyole ausgewählt aus der Gruppe der Polyether-polyole, Polyester-polyole, hergestellt aus Alkandicarbonsäuren und mehrwertigen Alkoholen, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Als höhermolekulare Verbindungen b) mit mindestens zwei reaktiven Wasserstoffatomen ungeeignet sind hingegen Alkydharze oder Polyesterformmassen mit reaktiven, olefinisch ungesättigten Doppelbindungen.
   Geeignete Polyester-polyole können beispielsweise aus Alkandicarbonsäuren mit 2 bis 12 Kohlenstoffatomen, vorzugsweise Alkandicarbonsäuren mit 4 bis 6 Kohlenstoffatomen oder Mischungen aus Alkandicarbonsäuren und aromatischen Polycarbonsäuren und mehrwertigen Alkoholen, vorzugsweise Diolen, mit 2 bis 12 Kohlenstoffatomen, vorzugsweise 2 bis 6 Kohlenstoffatomen und/oder Alkylenglykolen hergestellt werden. Als Alkandicarbonsäuren kommen beispielsweise in Betracht: Bernsteinsäure, Glutarsäure, Adipinsäure, Korksäure, Azelainsäure, Sebacinsäure und Decandicarbonsäure. Geeignete aromatische Polycarbonsäuren sind z.B. Phthalsäure, Isophthalsäure und Terephthalsäure. Die Alkandicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole oder Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die Mischungen aus aromatischen und aliphatischen Dicarbonsäuren und vorzugsweise Alkandicarbonsäuren und/oder -derivaten und mehrwertigen Alkoholen katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und ein Molekulargewicht von 480 bis 3000, vorzugsweise 1200 bis 3000 und insbesondere 1800 bis 2500.
   Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- bis achtwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.
   Die Polyether-polyole, vorzugsweise Polyoxypropylen- und Polyoxypropylen-polyoxyethylen-polyole, besitzen zur Herstellung von elastischen oder halbharten, zelligen Polyisocyanat-Polyadditionsprodukten eine Funktionalität von vorzugsweise 2 bis 4 und insbesondere 2 und/oder 3 und Molekulargewichte von vorzugsweise 1800 bis 6000 und insbesondere 2400 bis 4000 und geeignete Polyoxytetramethylen-glykole ein Molekulargewicht bis ungefähr 3500 und zur Herstellung von harten, zelligen Polyisocyanat-Polyadditionsprodukten, insbesondere Duromeren, eine Funktionalität von vorzugsweise 3 bis 8, und insbesondere 3 bis 6 und ein Molekulargewicht und vorzugsweise 400 bis 3200 und insbesondere 600 bis 2400.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 304 708), US-A-4 374 209 und DE-A-32 31 497.
   Die Polyether-polyole können ebenso wie die Polyester-polyole einzeln oder in Form von Mischungen verwendet werden. Zur Herstellung von elastischen Duromeren kann es z.B. zweckmäßig sein, geeignete Mischungen aus Polyether-polyolen mit Molekulargewichten bis 2400 und solchen mit Molekulargewichten von 2800 bis 4000 zu verwenden. Ferner können sie mit den Pfropf-polyether-polyolen oder Polyester-polyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschliepende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
c) Die Polyisocyanat-Polyadditionsprodukte und vorzugsweise Urethan- oder Urethan- und Isocyanuratgruppen enthaltende Integralschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Zur Herstellung zelliger Polyurethan-Polyharnstoff-Elastomerer können neben den obengenannten Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3',5,5'-tetraalkylsubstituierte Diamino-diphenylmethane Anwendung finden.
   Als sek. aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Dicyclohexyl-p-bzw. -m-Phenylendiamin, N,N'-Dimethyl-, N,N'-Diethyl-, N,N'-Diisopropyl-, N,N'-Di-sek-butyl-, N,N'-Dicyclohexyl-4,4'-diaminodiphenylmethan und N,N'-Di-sek-butyl-benzidin.
   Als aromatische Diamine werden zweckmäßigerweise solche verwendet, die in ortho-Stellung zu den Aminogruppen mindestens einen Alkylsubstituenten besitzen, bei Raumtemperatur flüssig und mit der Komponente (b), insbesondere den Polyether-polyolen, mischbar sind. Bewährt haben sich ferner alkylsubstituierte meta-Phenylendiamine der Formeln 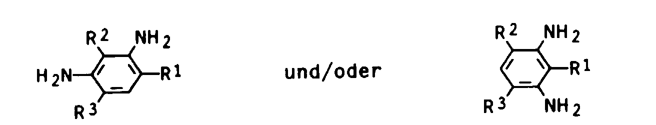 in den R³ und R² gleich oder verschieden sind und einen Methyl, Ethyl-, Propyl- und Isopropylrest bedeuten und R¹ ein linearer oder verzweigter Alkylrest mit 1 bis 10, vorzugsweise 4 bis 6 Kohlenstoffatomen ist.
   Insbesondere bewährt haben sich solche Alkylreste R¹, bei denen die Verzweigungsstelle am C¹-Kohlenstoffatom sitzt. Als Reste R¹ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.
   Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethylphenylendiamin-1,3. Vorzugsweise verwendet werden 1-Methyl-3,5-diethyl-2,4-ethyl-2,4- bzw. -2,6-phenylendiamine, 2,4-Dimethyl-6-tert.butyl-, 2,4-Dimethyl-6-isooctyl-und 2,4-Dimethyl-6-cyclohexyl-m-phenylendiamin-1,3.
   Geeignete 3,3'-di- und 3,3',5,5'-tetra-n-alkylsubstituierte 4,4'-Diaminodiphenylmethane sind beispielsweise 3,3'-Di-,3,3',5,5'-Tetramethyl-, 3,3'-Di-,3,3',5,5'-Tetraethyl-, 3,3'-Di-, und 3,3',5,5'-Tetra-n-propyl-4,4'-diaminodiphenylmethan.
   Vorzugsweise verwendet werden Diamino-diphenylmethane der Formel 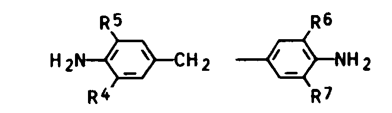 in der R⁴, R⁵, R⁶ und R⁷ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln 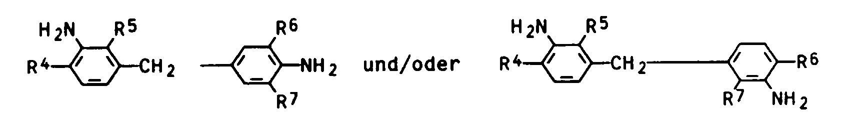 verwendet werden, wobei R⁴, R⁵, R⁶ und R⁷ die obengenannte Bedeutung haben.
   Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane können einzeln oder in Form von Mischungen eingesetzt werden.
   Die genannten Kettenverlängerungsmittel und/oder Vernetzungsmittel (c) können einzeln oder als Mischungen von gleichen oder verschiedenen Verbindungsarten verwendet werden.
   Sofern Kettenverlängerungsmittel, Vernetzungsmittel oder Mischungen davon Anwendung finden, kommen diese zweckmäßigerweise in Mengen von 2 bis 60 Gew.%, vorzugsweise 8 bis 50 Gew.% und insbesondere 10 bis 40 Gew.%, bezogen auf das Gewicht der Komponenten (b) und (c) zum Einsatz.
d) Erfindungsgemäß finden als Treibmittel (d) tertiäre Alkohole (di) oder vorzugsweise Mischungen aus mindestens einem tertiären Alkohol (di) und Wasser (dii) Verwendung.
   Als tertiäre Alkohole eignen sich solche der Formel I 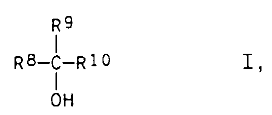 in der R⁸ eine aliphatische Gruppe bedeutet, die mindestens ein Wasserstoffatom enthält, das an den unmittelbar an die Carbinolgruppe gebundenen Kohlenstoff gebunden ist, während R⁹ und R¹⁰ organische Gruppen wie z.B. aromatische, cycloaliphatische oder vorzugsweise aliphatische Gruppen sind. Die aliphatischen Gruppen besitzen zweckmäßigerweise 1 bis 6 C-Atome und vorzugsweise 1 oder 2 C-Atome.
   Als tertiäre Alkohole in Betracht kommen beispielsweise 2-Ethyl-2-butanol, 2-Ethyl-2-pentanol, 2-Methyl-2-pentanol, 3-Methyl-3-hexanol, 4-Methyl-4-heptanol, 4-Propyl-4-heptanol, 4-Ethyl-4-heptanol, 2,3-Dimethyl-3-butanol, 2,3-Dimethyl-3-pentanol, 2,3,4-Trimethyl-3-pentanol, 3-Ethyl-2,4-dimethyl-3-pentanol, 3-Isopropyl-2,4-dimethyl-3-pentanol, 3-Isopropyl-2,4-dimethyl-3-pentanol und vorzugsweise tertiär Amylalkohol und insbesondere tertiär Butylalkohol. Die tertiären Alkohole können einzeln oder in Form von Mischungen aus zwei oder mehreren tertiären Alkoholen eingesetzt werden. Als Treibmittel (d) vorzüglich bewährt haben sich und daher vorzugsweise Anwendung finden Mischungen, die bestehen aus
   di) mindestens einem tertiären Alkohol und
   dii) Wasser.

   Da das Wasser mit den organischen, gegebenenfalls modifizierten Polyisocyanaten (a) unter Bildung von Kohlendioxid und Harnstoffgruppen reagiert, wird durch diese Reaktion gleichzeitig die Druckfestigkeit der zellhaltigen Formkörper beeinflußt.
   Die tertiären Alkohole (di) oder Mischungen davon werden zweckmäßigerweise in einer Menge von 0,5 bis 20 Gew.%, vorzugsweise von 0,7 bis 10 Gew.% und insbesondere von 1 bis 5 Gew.%, bezogen auf das Gesamtgewicht der Komponenten (a) bis (c) verwendet. Die aus den tertiären Alkoholen gebildete, zur Verschäumung verfügbare Treibgasmenge beträgt üblicherweise weniger als 50 Volumenprozent, vorzugsweise 10 bis 30 Volumenprozent der theoretisch berechenbaren Gasmenge.
   Da die in den als höhermolekulare Verbindungen (b) bevorzugt verwendeten Polyester-polyole und insbesondere Polyether-polyole als Nebenprodukt enthaltene Wassermenge meist ausreicht, bedarf es bei Verwendung einer Treibmittelmischung aus mindestens einem tertiären Alkohol und Wasser vielfach keiner separaten Wasserzugabe. Sofern jedoch der Formulierung zusätzlich Wasser einverleibt werden mup, wird dieses zweckmäßigerweise in Mengen von 0,05 bis 2 Gew.%, vorzugsweise von 0,09 bis 1 Gew.%, bezogen auf das Gewicht der Komponenten (a) bis (c) verwendet.
e) Als Katalysatoren (e) zur Herstellung der zelligen Kunststoffe nach dem Polyisocyanat-Polyadditionsverfahren werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Insbesondere bei Verwendung eines größeren Polyisocyanatüberschusses kommen als Katalysatoren ferner in Betracht: Tris-(dialkylaminoalkyl)-s-hexahydrotriazine, vorzugsweise Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination bezogen auf das Gewicht der Komponente (b).
f) Der Reaktionsmischung zur Herstellung der zelligen Kunststoffe nach dem Polyisocyanat-Polyadditionsverfahren können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie z.B. Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 (EP-A-153 639), Gemischen aus organischen Aminen, Metallsalzen der Stearinsäure und organischen Mono- und/oder Dicarbonsäuren oder deren Anhydride (DE-A-3 607 447) oder Gemischen aus einer Iminoverbindung, dem Metallsalz einer Carbonsäure und gegebenenfalls einer Carbonsäure (US 4 764 537).
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 Gew.% erreichen kann.
   Geeignete Flammschutzmittel sind beispielsweise Trikresylphosphat, Tris-2-chlorethylphosphat, Tris-chlorpropylphosphat und Tris-2,3-dibrompropylphosphat.
   Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke, z.B. Maisstärke zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.
   Zur Herstellung der zelligen Harnstoff- und/oder vorzugsweise Urethangruppen enthaltenden Kunststoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,25:1, vorzugsweise 0,95 bis 1,15:1 beträgt. Falls die zelligen Kunststoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 20:1, vorzugsweise 1,5 bis 8:1 angewandt.
   Die zellhaltigen Kunststoffe aus Polyisocyanat-polyadditionsprodukten, vorzugsweise zelligen Elastomeren oder insbesondere Schaumstoffe werden vorteilhafterweise nach dem one shot-Verfahren, beispielsweise mit Hilfe der Reaktionsspritzguß-, Hochdruck- oder Niederdruck-Technik in offenen oder geschlossenen Formwerkzeugen, beispielsweise metallischen Formwerkzeugen, z.B. aus Aluminium, Gußeisen oder Stahl, hergestellt. Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.
   Die Ausgangskomponenten werden bei einer Temperatur von 15 bis 90°C, vorzugsweise von 20 bis 35°C gemischt und in das offene oder gegebenenfalls unter erhöhtem Druck in das geschlossene Formwerkzeug eingebracht. Die Vermischung kann, wie bereits dargelegt wurde, mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 90°C, vorzugsweise 30 bis 60°C und insbesondere 45 bis 50°C.
   Nach bevorzugten Ausführungsformen werden die zellhaltigen Kunststoffe, insbesondere zellhaltigen Elastomeren, mit Hilfe der Reaktionsspritzgußtechnik in einem geschlossenen Formwerkzeug und die Formkörper mit einer verdichteten Randzone und einem zelligen Kern in einem geschlossenen Formwerkzeug unter Verdichtung mit einem Verdichtungsgrad von 1,5 bis 8,5, vorzugsweise 2 bis 6 hergestellt.
   Die nach dem erfindungsgemäßen Verfahren hergestellten zelligen Elastomeren besitzen Dichten von ungefähr 0,70 bis 1,2 g/cm³, vorzugsweise von 0,8 bis 1,0 g/cm³, wobei die Dichte von füllstoffhaltigen Produkten höhere Werte, z.B. bis 1,4 g/cm³ und mehr erreichen kann. Formkörper aus derartigen zelligen Elastomeren finden Verwendung in der Automobilindustrie, beispielsweise als Außenteile, wie z.B. Heckspoiler und Stoßfänger, und Innenauskleidungen sowie als Schuhsohlen.
   Die nach dem erfindungsgemäßen Verfahren hergestellten weichelastischen, halbharten und harten Schaumstoffe sowie die entsprechenden Integralschaumstoffe weisen eine Dichte von 0,02 bis 0,9 g/cm³ auf, wobei die Dichten der Schaumstoffe vorzugsweise 0,025 bis 0,24 g/cm³ und insbesondere 0,03 bis 0,1 g/cm³, die Gesamtdichten der halbharten und harten Integralschaumstoffe vorzugsweise 0,2 bis 0,9 g/cm³, und insbesondere 0,35 bis 0,8 g/cm3 und die Gesamtdichten der weichelastischen Integralschaumstoffe vorzugsweise 0,08 bis 0,7 g/cm³ und insbesondere 0,12 bis 0,6 g/cm3 betragen. Die Schaumstoffe und Integralschaumstoffe werden z.B. verwendet in der Fahrzeug-, z.B. Automobil-, Flugzeug- und Schiffbauindustrie, z.B. für Armlehnen, Kopfstützen oder Sicherheitsabdeckungen, der Möbel- und Sportartikelindustrie als beispielsweise Polstermaterialien, Gehäuseteile z.B. für Büro- und Haushaltgeräte, Fensterrahmen, Skiinnenschuh, Skikern u.a. Besonders eignen sie sich als Isolationsmaterial im Bau- und Kühlschranksektor.

### Beispiel 1

### A-Komponente:

Es wurde bei Raumtemperatur eine Mischung aus folgenden Substanzen hergestellt:

| | |
|---|---|
| 49 Gew.-Teilen | eines Polyether-polyols mit der OH-Zahl 480, hergestellt durch Polyaddition von 1,2-Propylenoxid an Ethylendiamin, |
| 35 Gew.-Teilen | eines Polyether-polyols mit der OH-Zahl 56, hergestellt durch Polyaddition von 1,2-Propylenoxid an Ethylenglykol, |
| 8 Gew.-Teilen | Glycerin, |
| 2 Gew.-Teilen | eines Silikonöls (Tegostab® B 8418 der Firma Goldschmidt), |
| 0,75 Gew.-Teilen | Methylimidazol, |
| 0,2 Gew.-Teilen | Wasser und |
| 5 Gew.-Teilen | tert.Butanol |

### B-Komponente:

Mischung aus Diphenylmethan-diisocyanaten und Polyphenyl-polymethylen-polyisocyanaten mit einem NCO-Gehalt von 31 Gew.% (Lupranat® M 20 S der BASF Aktiengesellschaft).

100 Gew.-Teile der A-Komponente und 118 Gew.-Teile der B-Komponente wurden bei 23°C unter intensivem Rühren gemischt. Ein Teil der schäumfähigen Reaktionsmischung wurde in ein offenes Formwerkzeug eingefüllt und aufschäumen gelassen. Die freigeschäumte Dichte des resultierenden Schaumstoffs betrug 0,15 g/cm³.

Ein anderer Teil der schäumfähigen Reaktionsmischung wurde in einer solchen Menge in ein auf 60°C temperiertes Formwerkzeug aus an der Oberfläche epoxidiertem Aluminium der Ausmaße 100x30x1 cm an einem Ende eingebracht, daß nach dem Aufschäumen und Aushärten im geschlossenen Formwerkzeug eine Integral-Hartschaumstoffplatte mit der Gesamtdichte von 0,6 g/cm³ resultierte.

Die im Mikroskop ermittelte Dicke der im wesentlichen kompakten Randzone betrug 1,3 bis 1,5 mm, der Schrumpf des Formkörpers nach dem Abkühlen 0,4 bis 0,5 %.

Die Shore D-Härte entlang des Fließwegs wurde alle 10 cm gemessen. Es wurden die folgenden Werte ermittelt:

| | | | | | | | | | | |
|---|---|---|---|---|---|---|---|---|---|---|
| Fließweg [cm] | 10 | 20 | 30 | 40 | 50 | 60 | 70 | 80 | 90 | 100 |
| Shore D-Härte | 70 | 70 | 69 | 71 | 70 | 70 | 70 | 69 | 68 | 69 |

Daraus errechnete sich ein Mittelwert von 70 und ein Variationskoeffizient von 1,2 % (Variationskoeffizient = Standardabweichung dividiert durch den Mittelwert als Maß für die Gleichmäßigkeit des Fließteils).

### Vergleichsbeispiel I

A-Komponente: analog Beispiel 1, wobei jedoch anstelle von 0,2 Gew.-Teilen 0,75 Gew.-Teile Wasser eingesetzt und auf den Zusatz von tertiär Butanol verzichtet wurde.

### B-Komponente: analog Beispiel 1

Die Herstellung des Formkörpers erfolgte ebenfalls analog den Angaben des Beispiels 1.

Der Formkörper besaß eine verdichtete Randzone in einer Dicke von lediglich 0,6 bis 0,8 mm, während der Schrumpf auf 0,8 % anstieg.

über die Länge des Fließwegs wurden an dem Formkörper folgende Shore D-Härten gemessen:

| | | | | | | | | | | |
|---|---|---|---|---|---|---|---|---|---|---|
| Fließweg [cm] | 10 | 20 | 30 | 40 | 50 | 60 | 70 | 80 | 90 | 100 |
| Shore D-Härte | 69 | 67 | 67 | 66 | 66 | 65 | 65 | 65 | 64 | 64 |

Der Mittelwert der Shore D-Härte betrug 66, der Variationskoeffizient 2,35. Die Härte des Formkörpers war aufgrund der schlechteren Randzonenausbildung nicht nur erheblich niedriger, sondern auch die Gleichmäßigkeit über die gesamte Fließstrecke war praktisch um den Faktor 2 schlechter.

### Beispiel 2

### A-Komponente:

Bei Raumtemperatur wurde eine Mischung hergestellt, die bestand aus:

| | |
|---|---|
| 28 Gew.-Teilen | eines Polyether-polyols mit der OH-Zahl 550, hergestellt durch Polyaddition von 1,2-Propylenoxid an Trimethylolpropan, |
| 17 Gew.-Teilen | eines Polyether-polyols mit der OH-Zahl 400, hergestellt durch Polyaddition von 1,2-Propylenoxid an Glycerin, |
| 23 Gew.-Teilen | eines Polyoxypropylen (75 Gew.%)-polyoxyethylen (25 Gew.%)-polyols mit der OH-Zahl 35, hergestellt durch Polyaddition von 1,2-Propylenoxid an Glycerin und anschliepende Polyaddition von Ethylenoxid an das Glycerin-1,2-Propylenoxidaddukt, |
| 15 Gew.-Teilen | Glycerin, |
| 0,3 Gew.-Teilen | Wasser, |
| 6 Gew.-Teilen | tert.Butanol, |
| 2,4 Gew.-Teilen | eines Silikonöls (Tegostab® B 8418 der Firma Goldschmidt), |
| 1,5 Gew.-Teilen | N,N-Dimethylcyclohexylamin, |
| 0,8 Gew.-Teilen | Methylimidazol und |
| 6 Gew.-Teilen | Trichlorethylphosphat |

### B-Komponente: analog Beispiel 1

100 Gew.-Teile der A-Komponente und 133 Gew.-Teile der B-Komponente wurden bei 23°C unter intensivem Rühren gemischt und analog den Angaben des Beispiels 1 mit einem offenen und einem geschlossenen Formwerkzeug unter Verdichtung verschäumt.

Die Dichte des freigeschäumten Formteils betrug 0,13 g/cm³.

Die hergestellte Integral-Hartschaumstoffplatte besaß eine Gesamtdichte von 0,6 g/cm³, eine Shore D-Härte von 72 und einen Variationskoeffizienten der Shore D-Härtewerte entlang des Fließwegs von 1,1 %.

### Vergleichsbeispiel II

Man verfuhr analog den Angaben des Beispiels 2, verwendete jedoch in der A-Komponente anstelle einer Mischung aus 0,3 Gew.-Teilen Wasser und 6 Gew.-Teilen tertiär Butanol nur 0,9 Gew.-Teile Wasser. Das resultierende Formteil besaß eine Gesamtdichte von 0,6 g/l, eine durchschnittliche Shore D-Härte von 67 und wies einen Variationskoeffizienten der Shore D-Härte entlang des Fließwegs von 3,0 % auf.

### Beispiel 3

### A-Komponente:

Bei Raumtemperatur wurde eine Mischung hergestellt, die bestand aus:

| | |
|---|---|
| 42 Gew.-Teilen | eines Polyoxypropylen (75 Gew.%)-polyoxyethylen (25 Gew.%)-polyols mit der OH-Zahl 23, hergestellt durch Polyaddition von 1,2-Propylenoxid an Ethylenglykol und anschliepende Polyaddition von Ethylenoxid an das Ethylenglykol-1,2-Propylenoxidaddukt, |
| 40 Gew.-Teilen | eines Polyoxypropylen (75 Gew.%)-polyoxyethylen (25 Gew.%)-polyols mit der OH-Zahl 35, hergestellt durch Polyaddition von 1,2-Propylenoxid an Glycerin und anschliepende Polyaddition von Ethylenoxid an das Glycerin-1,2-Propylenoxidaddukt, |
| 5 Gew.-Teilen | Ethylenglycol, |
| 0,3 Gew.-Teilen | Triethylen-diamin, |
| 0,2 Gew.-Teilen | Wasser und |
| 5 Gew.-Teilen | tert.Butanol |

### B-Komponente:

Urethangruppen enthaltende Polyisocyanatmischung mit einem NCO-Gehalt von 28 Gew.%, hergestellt durch partielle Umsetzung einer Mischung aus Diphenylmethan-diisocyanaten und Polyphenyl-polymethylen-polyisocyanaten mit einem NCO-Gehalt von 31 Gew.% mit Dipropylenglykol.

100 Gew.-Teile der A-Komponente und 48 Gew.-Teile der B-Komponente wurden intensiv gemischt und die Reaktionsmischung in ein auf 50°C temperiertes Formwerkzeug aus Aluminium der Ausmaße 20x20x1 cm in einer solchen Menge eingefüllt, daß ein Formkörper mit der Gesamtdichte von 0,35 g/cm³ resultierte.

Nach dem Aufschäumen und Aushärtenlassen der Reaktionsmischung in dem geschlossenen Formwerkzeug erhielt man eine flexible Integralschaumstoffplatte mit einer Shore A-Härte von 37, einer gut ausgebildeten kompakten Randzone und einer glatten, porenfreien Oberfläche.

### Vergleichsbeispiel III

Man verfuhr analog den Angaben des Beispiels 3, verwendete jedoch in der A-Komponente 0,5 Gew.-Teile Wasser und verzichtete auf den Zusatz des tertiär Butanols.

Das hergestellte Formteil besaß eine Shore A-Härte von 29 und wies eine poröse Randzone mit porenhaltiger Haut auf.

## Patentansprüche

1. Verfahren zur Herstellung von Formkörpern mit einer verdichteten Randzone und einem zelligen Kern aus Urethangruppen enthaltenden Kunststoffen durch Umsetzung von
a) organischen und/oder modifizierten organischen Polyisocyanaten mit
b) mindestens einer höhermolekularen Verbindung mit mindestens zwei reaktiven Wasserstoffatomen mit Ausnahme von Alkydharzen und Polyesterformmassen mit reaktiven, olefinisch ungesättigten Doppelbindungen und gegebenenfalls
c) niedermolekularen Kettenverlängerungs- und/oder Vernetzungsmitteln
in Gegenwart von
d) Treibmitteln,
e) Katalysatoren und gegebenenfalls
f) Hilfsmitteln und/oder Zusatzstoffen,
in einem geschlossenen Formwerkzeug unter Verdichtung und unter anschließender Entnahme der Formkörper, dadurch gekennzeichnet, daß man als Treibmittel (d) mindestens einen tertiären Alkohol (di) der allgemeinen Formel I 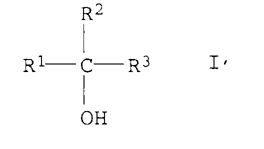 in der
R¹, R² und R³ aliphatische Gruppen sind, wobei R¹ mindestens ein Wasserstoffatom enthält, das an den unmittelbar an die Carbinolgruppe gebundenen Kohlenstoff gebunden ist, verwendet.

2. Verfahren nach Anspruch 1, dadurch gekennzeichnet, daß man als Treibmittel (d) eine Mischung aus
di) mindestens einem tertiären Alkohol und
dii) Wasser
verwendet.

3. Verfahren nach Anspruch 1, dadurch gekennzeichnet, daß man als Treibmittel (d) 0,5 bis 20 Gew.-%, bezogen auf das Gesamtgewicht der Komponenten (a) bis (c), mindestens eines tertiären Alkohols (di) verwendet.

4. Verfahren nach Anspruch 1, dadurch gekennzeichnet, daß man als Treibmittel (d) eine Mischung verwendet, die besteht aus
di) 0,5 bis 20 Gew.-% mindestens eines tertiären Alkohols und
dii) 0,05 bis 2 Gew.-% Wasser, wobei die Gewichtsprozente bezogen sind auf das Gesamtgewicht der Komponenten (a) bis (c).

5. Verfahren nach einem der Ansprüche 1 bis 4, dadurch gekennzeichnet, daß man als Treibmittel (d) tertiär Butanol (di) verwendet.

6. Verfahren nach einem der Ansprüche 1 bis 5, dadurch gekennzeichnet, daß die Umsetzung in einem geschlossenen Formwerkzeug unter Verdichtung mit einem Verdichtungsgrad von 2 bis 6 durchgeführt wird.

7. Verfahren nach einem der Ansprüche 1 bis 6, dadurch gekennzeichnet, daß man als organische und/oder modifizierte organische Polyisocyanate (a) Mischungen aus Diphenylmethan-diisocyanaten und Polyphenyl-polymethylen-polyisocyanaten (Roh-MDI) oder Urethangruppen enthaltende Polyisocyanatmischungen auf Basis von Roh-MDI verwendet.

8. Verfahren nach einem der Ansprüche 1 bis 7, dadurch gekennzeichnet, daß man als höhermolekulare Verbindungen (b) Polyether-polyole mit einer Funktionalität von 2 bis 8 und einem Molekulargewicht von 400 bis 6000 verwendet.

9. Verfahren zur Herstellung von Formkörpern mit einer verdichteten Randzone und einem zelligen Kern aus Urethangruppen enthaltenden Kunststoffen durch Umsetzung von
a) gegebenenfalls Urethangruppen enthaltenden Polyisocyanatmischungen aus Diphenylmethan-diisocyanaten und Polyphenyl-polymethylen-polyisocyanaten mit
b) Polyether-polyolen mit einer Funktionalität von 2 bis 8 und einem Molekulargewicht von 400 bis 6000 und gegebenenfalls
c) niedermolekularen Kettenverlängerungs- und/oder Vernetzungsmitteln
in Gegenwart von
d) Treibmitteln,
e) Katalysatoren und gegebenenfalls
f) Hilfsmitteln und/oder Zusatzstoffen,
in einem geschlossenen Formwerkzeug unter Verdichtung mit einem Verdichtungsgrad von 2 bis 6 unter anschließender Entnahme der Formkörper, dadurch gekennzeichnet, daß man als Treibmittel (d) mindestens einen tertiären Alkohol (di) 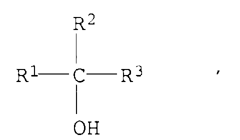 in der
R¹, R² und R³ aliphatische Gruppen sind, wobei R¹ mindestens ein Wasserstoffatom enthält, das an den unmittelbar an die Carbinolgruppe gebundenen Kohlenstoff gebunden ist,
verwendet.

## Claims

1. A process for the production of moldings having a compacted peripheral zone and a cellular core from a urethane-containing plastic, by reacting
a) an organic and/or modified organic polyisocyanate with
b) at least one high-molecular-weight compound containing at least two reactive hydrogen atoms, with the exception of alkyd resins and polyester molding materials having reactive, olefinically unsaturated double bonds, and, if desired,
c) a low-molecular-weight chain extender and/or crosslinking agent
in the presence of
d) a blowing agent,
e) a catalyst and, if desired,
f) assistants and/or additives,
in a closed mold with compaction and with subsequent removal of the moldings, wherein the blowing agent (d) used is at least one tertiary alcohol (di) of the formula I 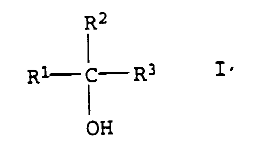 where
R¹, R² and R³ are aliphatic groups, where R¹ contains at least one hydrogen atom which is bonded to the carbon directly bonded to the carbinol group.

2. A process as claimed in claim 1, wherein the blowing agent (d) used is a mixture of
di) at least one tertiary alcohol and
dii) water.

3. A process as claimed in claim 1, wherein the blowing agent (d) used is from 0.5 to 20% by weight, based on the total weight of components (a) to (c), of at least one tertiary alcohol (di).

4. A process as claimed in claim 1, wherein the blowing agent (d) used is a mixture comprising
di) from 0.5 to 20% by weight of at least one tertiary alcohol and
dii) from 0.05 to 2% by weight of water, the percentages by weight being based on the total weight of components (a) to (c).

5. A process as claimed in one of claims 1 to 4, wherein the blowing agent (d) used is tertiary butanol (di).

6. A process as claimed in one of claims 1 to 5, wherein the reaction is carried out in a closed mold with compaction to a degree of from 2 to 6.

7. A process as claimed in one of claims 1 to 6, wherein the organic and/or modified organic polyisocyanate (a) used is a mixture of a diphenylmethane diisocyanate and a polyphenyl-polymethylene polyisocyanate (crude MDI) or a urethane-containing polyisocyanate mixture based on crude MDI.

8. A process as claimed in one of claims 1 to 7, wherein the high-molecular-weight compound (b) used is a polyether-polyol having a functionality of from 2 to 8 and a molecular weight of from 400 to 6000.

9. A process for the production of moldings having a compacted peripheral zone and a cellular core from a urethane-containing plastic, by reacting
a) a polyisocyanate mixture which may contain urethane and consists of a diphenylmethane diisocyanate and a polyphenyl-polymethylene polyisocyanate with
b) a polyether-polyol having a functionality of from 2 to 8 and a molecular weight of from 400 to 6000 and, if desired,
c) a low-molecular-weight chain extender and/or crosslinking agent
in the presence of
d) a blowing agent,
e) a catalyst and, if desired,
f) assistants and/or additives,
in a closed mold with compaction to a degree of compaction of from 2 to 6 with subsequent removal of the moldings, wherein the blowing agent (d) used is at least one tertiary alcohol (di) 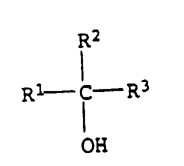 where
R¹, R² and R³ are aliphatic groups, where R¹ contains at least one hydrogen atom which is bonded to the carbon directly bonded to the carbinol group.

## Revendications

1. Procédé pour la préparation de corps moulés possédant une zone marginale comprimée et une partie centrale alvéolaire constituée par des matières synthétiques contenant des groupes uréthane, par mise en réaction
a) de polyisocyanates organiques et/ou organiques modifiés avec
b) au moins un composé à poids moléculaire élevé contenant au moins deux atomes d'hydrogène réactifs, à l'exception de résines alkydes et de matières à mouler en polyester contenant des liaisons doubles réactives oléfiniquement insaturées et, le cas échéant,
c) des agents d'allongement de chaînes et/ou des agents de réticulation à bas poids moléculaires,
en présence
d) d'agents moussants,
e) de catalyseurs et le cas échéant
f) d'adjuvants et/ou d'additifs,
dans un moule fermé, dans des conditions de compression et de retrait ultérieur des corps moulés, caractérisé en ce qu'on utilise, à titre d'agent moussant (d), au moins un alcool tertiaire (di) répondant à la formule générale I 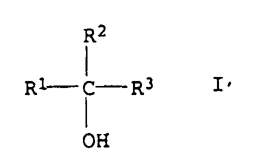 dans laquelle
R¹, R² et R³ représentent des groupes aliphatiques, R¹ contenant au moins un atome d'hydrogène qui est lié à l'atome de carbone directement lié au groupe carbinol.

2. Procédé selon la revendication 1, caractérisé en ce qu'on utilise, à titre d'agents moussants (d), un mélange
di) d'au moins un alcool tertiaire et
dii) d'eau.

3. Procédé selon la revendication 1, caractérisé en ce qu'on utilise, à titre d'agent moussant (d), à concurrence de 0,5 à 20% en poids rapportés au poids total des composants (a) à (c), au moins un alcool tertiaire (di).

4. Procédé selon la revendication 1, caractérisé en ce qu'on utilise, à titre d'agent moussant (d), un mélange qui est constitué par
di) à concurrence de 0,5 à 20% en poids, au moins un alcool tertiaire et
dii) à concurrence de 0,05 à 2% en poids, de l'eau, les pour cent en poids se rapportant au poids total des composants (a) à (c).

5. Procédé selon les revendications 1 à 4, caractérisé en ce qu'on utilise, à titre d'agent moussant (d), du tert-butanol (di).

6. Procédé selon l'une quelconque des revendications 1 à 5, caractérisé en ce qu'on effectue la mise en réaction dans un moule fermé, dans des conditions de compression avec un degré de compression de 2 à 6.

7. Procédé selon l'une quelconque des revendications 1 à 6, caractérisé en ce qu'on utilise, à titre de polyisocyanates organiques et/ou organiques modifiés, (a) des mélanges de diphénylméthane-diisocyanates et de polyphényl-polyméthylène-polyisocyanates (MDI brut) ou encore des mélanges de polyisocyanates contenant des groupes uréthane à base de MDI brut.

8. Procédé selon l'une quelconque des revendications 1 à 7, caractérisé en ce qu'on utilise, à titre de composés (b) à poids moléculaires élevés, des polyéther-polyols possédant une fonctionnalité de 2 à 8 et un poids moléculaire de 400 à 6.000.

9. Procédé pour la préparation de corps moulés possédant une zone marginale comprimée et une partie centrale alvéolaire constituée par des matières synthétiques contenant des groupes uréthane, par mise en réaction
a) de mélanges de polyisocyanates contenant éventuellement des groupes uréthane, constitués par des diphénylméthane-diisocyanates et par des polyphényl-polyméthylène-polyisocyanates avec
b) des polyéther-polyols possédant une fonctionnalité de 2 à 8 et un poids moléculaire de 400 à 6.000, et le cas échéant avec
c) des agents d'allongement de chaînes et/ou des agents de réticulation à bas poids moléculaires,
en présence
d) d'agents moussants,
e) de catalyseurs, et le cas échéant,
f) d'adjuvants et/ou d'additifs,
dans un moule fermé, dans des conditions de compression avec un degré de compression de 2 à 6 et de retrait ultérieur des corps moulés, caractérisé en ce qu'on utilise, à titre d'agent moussant (d), au moins un alcool tertiaire (di) de formule 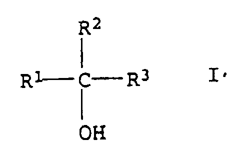 dans laquelle
R¹, R² et R³ représentent des groupes aliphatiques, R¹ contenant au moins un atome d'hydrogène qui est lié à l'atome de carbone directement lié au groupe carbinol.
